# EUROPEAN PATENT SPECIFICATION

(11) **EP 2 762 841 B1**
(45) Date of publication and mention of the grant of the patent: **08.08.2018**
(21) Application number: 12835850.4
(22) Date of filing: 28.09.2012
(51) Int. Cl.: G01F 1/00, G01F 3/22, G01F 15/06, G08C 15/00

(54) **WIRELESS DEVICE**
DRAHTLOSE VORRICHTUNG
DISPOSITIF SANS FIL

(30) Priority: 29.09.2011 JP 2011213956
(43) Date of publication of application: 06.08.2014
(73) Proprietor: Panasonic Corporation, Osaka 571-8501 (JP)
(72) Inventor: WATANABE, Takashi, Chuo-ku, Osaka 540-6207 (JP); MIYATAKE, Shuhei, Chuo-ku, Osaka 540-6207 (JP); SUGIYAMA, Masaki, Chuo-ku, Osaka 540-6207 (JP)
(74) Representative: Schwabe - Sandmair - Marx
(86) International application number: PCT/JP2012/006247
(87) International publication number: WO 2013/046719

(56) References cited:
- WO-A1-2009/055061
- JP-A- 2005 315 829
- JP-A- 2006 105 857
- JP-A- 2012 127 657
- JP-U- H01 165 422
- US-A1- 2010 072 990
- US-A1- 2011 115 643

## Description

### TECHNICAL FIELD

The present invention relates to an attachment mechanism for attaching, to the outside of a meter, a pulse conversion mechanism necessary for converting flow volume information into an electrical signal in order to measure the flow volume of liquid, powder, gas, or the like.

### BACKGROUND ART

A known technique for detecting whether a terminal or an accessory is correctly attached to the outside of equipment, employs a pressure switch that operates depending on the pressure. Specifically, when a terminal or an accessory is attached to the outside of equipment, a pressure switch on the equipment or the terminal is pressed, and the attachment is detected based on turning on or off of the switch. In this technique, the pressure switch converts a physical variation into an electrical variation in order to detect attachment of the terminal to the equipment (see, for example, Japanese Unexamined Patent Publication No. S60-254556). The document WO 2009/055061 A1 discloses a wireless device according to the state of the art.

### SUMMARY OF THE INVENTION

### TECHNICAL PROBLEM

In the known technique, to detect attachment of a terminal to equipment with the pressure switch, dimensions of, or stress on, a portion to be pressed needs to be adjusted for each piece of equipment, and a structure that physically varies is required. Thus, there arises a problem of difficulty in achieving a structure requiring waterproof and powderproof properties with a simple configuration. This problem leads to an increased cost of components and a higher fabrication cost.

### SOLUTION TO THE PROBLEM

To solve the problem, the present invention employs a configuration of a wireless device including: a casing defining a contour of the wireless device; a flow volume detection switch located in the casing and configured to detect a flow volume of fluid; an installation detection switch configured to detect an installation location of the flow volume detection switch or the casing; an arithmetic section to calculate an output from the flow volume detection switch and an output from the installation detection switch; and a wireless communication section configured to transmit a result of calculation by the arithmetic section to another terminal, wherein the installation detection switch is a switch reactive to a magnetic field.

That is, a sealed structure is maintained without a pressure switch or other devices, and attachment of the wireless device is detected. For example, it is detected whether a terminal is correctly attached to equipment by detecting a magnetic field with the use of a known magnet for flow volume detection.

In addition, arithmetic operation on an output from the flow volume detection switch is modified depending on an output from the installation detection switch, thereby reducing failures in measurements caused by malfunction.

### ADVANTAGES OF THE INVENTION

According to the present invention, without the use of a sensor for detecting a variation amount of a mechanism, a sealed structure can be achieved with a simple configuration. Thus, a terminal allowing for reduced cost of components and lower fabrication cost can be obtained. In addition, since correct installation is detected by using a magnetic field, an installation state can be detected more accurately without changing the configuration for each terminal. As a result, the performance can be enhanced.

### BRIEF DESCRIPTION OF THE DRAWINGS

FIG. 1 is a perspective view illustrating a gas meter in which a wireless device according to a first embodiment of the present invention is installed.
FIG. 2 is a disassembled perspective view illustrating an internal configuration of the wireless device shown in FIG. 1.
FIG 3 is a cross-sectional view illustrating internal configurations of a measurement unit and the wireless device shown in FIG. 1.
FIG. 4 is a conceptual view showing driving areas of an installation detection switch and a flow volume detection switch shown in FIG. 3.
FIG. 5 is a block diagram illustrating a circuit configuration of the wireless device in FIG. 1.
FIG. 6 is a flowchart showing operation of the wireless device.
FIG. 7 is a conceptual view showing driving areas of an installation detection switch and a flow volume detection switch in a wireless device according to a second embodiment of the present invention.
FIG. 8 is a block diagram illustrating a circuit configuration of the wireless device of the second embodiment.
FIG. 9 shows output waveforms of the installation detection switch and the flow volume detection switch illustrated in FIG. 8.
FIG. 10 is a flowchart showing operation of the wireless device illustrated in FIG. 8.
FIG. 11 is a cross-sectional view illustrating internal configurations of a wireless device according to a third embodiment of the present invention and a measurement unit in a gas meter.
FIG. 12 is a conceptual view showing a driving area of a flow volume detection switch illustrated in FIG. 11.
FIG. 13 is a conceptual view showing a driving area of an installation detection switch illustrated in FIG. 11.
FIG. 14 is a block diagram illustrating a circuit configuration of a wireless device according to a third embodiment of the present invention.
FIG. 15 shows output waveforms of a flow volume detection switch and an installation detection switch illustrated in FIG. 14.
FIG. 16 is a flowchart showing operation of the wireless device illustrated in FIG. 14.
FIG. 17 is a cross-sectional view illustrating internal configurations of a wireless device according to a fourth embodiment of the present invention and a measurement unit in a gas meter.
FIG. 18 is a conceptual view showing a driving area of a flow volume detection switch illustrated in FIG. 17.
FIG. 19 is a conceptual view showing a driving area of an installation detection switch illustrated in FIG. 17.
FIG. 20 is a block diagram illustrating a circuit configuration of the wireless device of the fourth embodiment.
FIG. 21 is a flowchart showing operation of the wireless device illustrated in FIG. 20.

### DESCRIPTION OF EMBODIMENTS

Embodiments of the present invention will be described with reference to the drawings. The embodiments are not intended to limit the present invention.

### First Embodiment

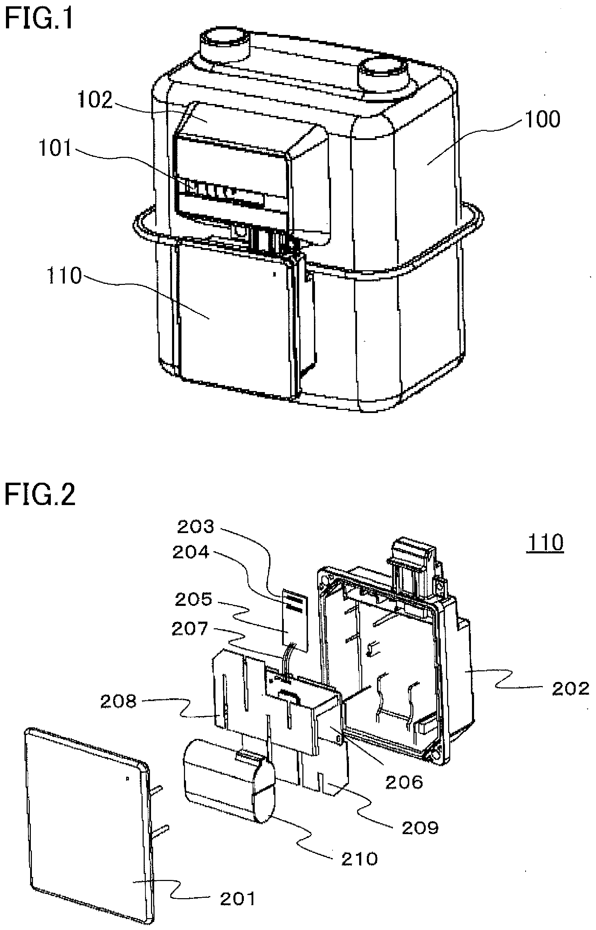

FIG. 1 illustrates an overall configuration in which a wireless device 110 incorporating an attachment detection mechanism according to an embodiment of the present invention is installed in a gas meter 100. The wireless device 110 includes an attachment detection mechanism for detecting installation in the gas meter 100 when the wireless device 110 is installed in the gas meter 100. The gas meter 100 causes gears of a usage amount display unit 101 provided in the measurement unit 102 to rotate, and displays a numerical value on the usage amount display unit 101.

Referring now to FIG. 2, an internal configuration of the wireless device 110 incorporating an installation detection mechanism will be described. Components of the wireless device 110 are placed in a casing that defines a contour of the wireless device 110 and is constituted by an upper case 201 and a lower case 202 each made of, for example, resin. In the wireless device 110, an installation detection switch 203 serving as a mechanism that detects attachment of the wireless device 110 to the gas meter 100 and a flow volume detection switch 204 that generates a flow volume pulse depending on a flow volume of gas flowing in the gas meter 100 are mounted on a switch board 205. Signals from the two detection switches 203 and 204 on the switch board 205 are connected to a main board 206 through a connection harness 207. On the main board 206, information generated by the installation detection switch 203 and the flow volume detection switch 204 on the switch board 205 are subjected to signal processing and other processes and is taken in, for example, an arithmetic unit, and it is detected that the wireless device 110 is installed in the gas meter 100. To transmit the detected installation state to the outside, wireless communication is performed through a radio circuit on the main board 206, an antenna element 208, a ground board 209, and other components. Energy necessary for, for example, the above-described installation detection, flow volume detection, signal processing, and wireless communication is supplied with a battery 210.

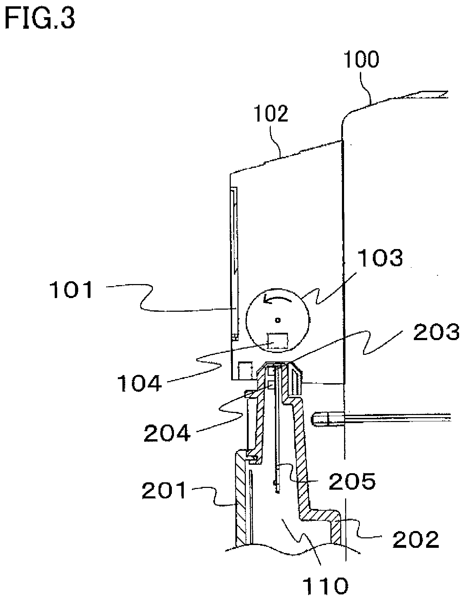

Referring now to FIG. 3, it will be described how the gas flow volume is detected after attachment of the wireless device 110 to the gas meter 100. In the gas meter 100, a measurement mechanism 103 in the measurement unit 102 rotates depending on the gas flow volume, and the usage amount display unit 101 displays the amount of gas usage. The measurement mechanism 103 is constituted by a plurality of gears that rotate depending on the gas flow volume. Each of the gears is marked with numbers such that the gears also serve as a display device indicating the amount of gas usage. Among the gears of the measurement mechanism 103, the lowest-order gear includes a measurement magnet 104 that rotates with rotation of the lowest-order gear.

The wireless device 110 that transmits a gas flow volume is a device surrounded by the casing constituted by the upper case 201 and the lower case 202. With respect to the flow volume detection switch 204 that performs flow volume detection in the casing, the measurement mechanism 103 is caused to rotate by a flow of gas so that the distance between the measurement magnet 104 and the flow volume detection switch 204 varies. When the distance between the flow volume detection switch 204 and the measurement magnet 104 increases, the flow volume detection switch 204 turns off, whereas when the distance between the flow volume detection switch 204 and the measurement magnet 104 decreases, the flow volume detection switch 204 turns on.

The flow volume detection switch 204 is, for example, a reed switch whose contact point turns on when a magnet approaches the switch and turns off when the magnet moves away from the switch. Alternatively, a semiconductor device (e.g., a Hall IC) that detects a magnetic field or a semiconductor device whose resistance varies depending on a magnetic flux density may be employed.

In a case where the flow volume detection switch 204 is a reed switch, the reed switch needs to be disposed such that on/off operation thereof is performed within a range of the distance between the measurement magnet 104 and the flow volume detection switch 204, and also needs to have an adequate working value.

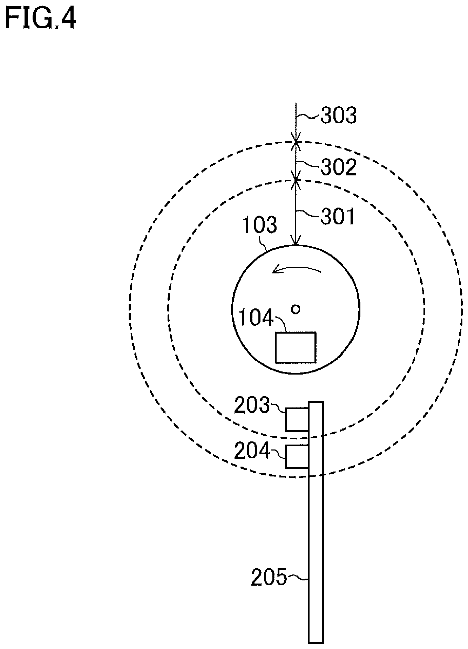

Referring now to FIG. 4, the positional relationship between the measurement magnet 104 and the flow volume detection switch 204 will be described. FIG. 4 schematically illustrates a layout including: the measurement mechanism 103 that measures a gas flow volume and is located in the measurement unit 102; the measurement magnet 104 embedded in the measurement mechanism 103; and the switch board 205, the flow volume detection switch 204, and the installation detection switch 203 in the wireless device 110. An area where the flow volume detection switch 204 is turned on/off depends on, for example, the level of the magnetic field of the measurement magnet 104 and the working value of the flow volume detection switch 204.

In FIG. 4, an area 301 is an area where when the flow volume detection switch 204 is disposed in this area 301, the measurement mechanism 103 rotates and the flow volume detection switch 204 is always on irrespective of a variation of the distance between the measurement magnet 104 and the flow volume detection switch 204.

An area 302 is an area where when the flow volume detection switch 204 is disposed in this area 302, the measurement mechanism 103 rotates and the flow volume detection switch 204 turns on or off with a variation of the distance between the measurement magnet 104 and the flow volume detection switch 204. That is, rotation of the measurement mechanism 103 changes the flow volume detection switch 204 from an on state to an off state or from an off state to an on state. When a pulse generator is connected to the flow volume detection switch 204, a pulse waveform is output in accordance with the gas flow volume. That is, when the flow volume detection switch 204 is disposed in the area 302, a gas flow volume can be detected.

An area 303 is an area where when the flow volume detection switch 204 is disposed in this area 303, the measurement mechanism 103 rotates and the flow volume detection switch 204 is always off irrespective of a variation of the distance between the measurement magnet 104 and the flow volume detection switch 204.

As described above, the region can be divided into three areas in accordance with the positional relationship between the measurement magnet 104 and the flow volume detection switch 204. This relationship varies depending on the performance of the measurement magnet 104.

In FIG. 4, the installation detection switch 203 is disposed in the area 301 on the switch board 205. Then, gas flows to rotate the measurement mechanism 103, and the installation detection switch 203 is always on irrespective of a change in positional relationship between the measurement magnet 104 and the installation detection switch 203. In this manner, it is detected that the wireless device 110 is attached to the gas meter 100. This mechanism can also be used as a mechanism for detecting installation of the wireless device 110 at a correct position or a mechanism for detecting, for example, a theft.

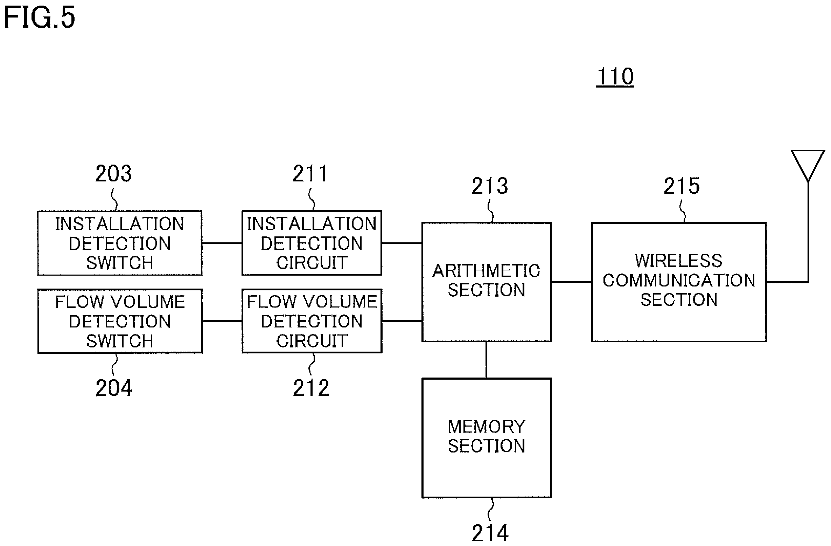

Then, a mechanism for detecting that the wireless device 110 is attached to the gas meter 100 will be described with reference to the internal block diagram of the wireless device 110 in FIG. 5.

In FIG. 5, the wireless device 110 includes: the installation detection switch 203 that detects whether the wireless device 110 is installed in the gas meter 100 or not; the flow volume detection switch 204 that detects a gas flow volume; the installation detection circuit 211 for shaping the waveform of an on/off signal of the installation detection switch 203; the flow volume detection circuit 212 for shaping the waveform of the flow volume detection switch 204; an arithmetic section 213 that takes the waveforms generated by the installation detection circuit 211 and the flow volume detection circuit 212 and performs a measurement process and a detection process; a memory section 214 that stores, for example, results of the measurement process and the detection process performed in the arithmetic section 213 and an initial value of the gas flow volume; and a wireless communication section 215 that transmits the results on the gas flow volume and the installation detection of the wireless device 110 obtained by the arithmetic section 213, a past measurement result of a gas flow volume stored in the memory section 214, or an arithmetic result obtained from a measurement result, to a higher-order terminal.

Referring now to FIG. 5, a mechanism for detecting that the wireless device 110 is attached to the gas meter 100 will be described. When the wireless device 110 is attached to the gas meter 100, the installation detection switch 203 is changed from an off state to an on state by the measurement magnet 104 in the gas meter 100. Then, in the installation detection circuit 211, a bias voltage is applied to an output of the installation detection switch 203, thereby shaping the waveform. For example, when the installation detection switch 203 turns on, a signal output corresponding to a high level of the bias voltage is obtained in the installation detection circuit 211. In a case where current is consumed in the installation detection circuit 211 and its peripheral circuit by always applying a bias voltage, an enable circuit may be provided such that a voltage level is applied only when installation detection is performed. Thereafter, the output of the installation detection circuit 211 is input to the arithmetic section 213, where the on/off state of the installation detection switch 203 is determined. To determine the on/off state, the arithmetic section 213 may periodically perform edge detection to determine an output level of the installation detection circuit 211, or the arithmetic section 213 receiving an analog input may perform level determination. The arithmetic section 213 measures a gas flow volume obtained through the flow volume detection switch 204 and the flow volume detection circuit 212 only when it is detected that the wireless device 110 is attached to the gas meter 100.

In this manner, the arithmetic operation on an output from the flow volume detection switch 204 is modified depending on the output from the installation detection switch 203, thereby reducing failures in measurements caused by malfunction. In addition, when it is determined that the installation location of the flow volume detection switch 204 or the casing is not correct depending on the output from the installation detection switch 203, no arithmetic operation is performed on the output from the flow volume detection switch 204. Thus, flow volume detection is not performed when the wireless device 110 is incorrectly installed, i.e., the wireless device 110 is always correctly attached as long as the flow volume detection can be performed.

Results of the measurement process obtained by the arithmetic section 213 are stored in the memory section 214 at predetermined intervals. The stored measurement data is regularly transmitted from the wireless communication section 215 to a higher-order terminal or a relay terminal.

In the middle of a gas flow volume measurement process or in a state ready for the gas flow volume measurement process, when the arithmetic section 213 detects that the wireless device 110 is not installed in the gas meter 100 through the installation detection switch 203 and the installation detection circuit 211, processes of measuring a gas flow volume performed in the flow volume detection switch 204, the flow volume detection circuit 212, and the arithmetic section 213 are stopped. Alternatively, information and time on turning off of the installation detection switch 203 or data obtained by measurement processes after turning off of the installation detection circuit 211 is stored in the memory section 214 such that the information and time or the data can be separated from data obtained by measurement processes when the installation detection circuit 211 is on.

In addition, when the installation detection switch 203 turns off and the arithmetic section 213 detects that the wireless device 110 is detached from the gas meter 100 through the installation detection circuit 211, the wireless communication section 215 notifies a higher-order terminal or a relay terminal of the detection result in accordance with a predetermined protocol.

The foregoing configuration ensures the detection of correct attachment of the wireless device 110 to the gas meter 100, and a normal gas flow volume measurement process can be performed. It is also possible to detect detachment of the wireless device 110 in a gas flow volume measurement process or to detect a displacement of an installation location. In addition, by detecting incorrect installation of the wireless device 110, in the notification to the higher-order terminal, data obtained by a gas flow volume measurement process in an incorrect installation state is separately stored from data obtained by a gas flow volume measurement process in a correct installation state, for example. Then, it can be determined whether target data is reliable or not in a later process.

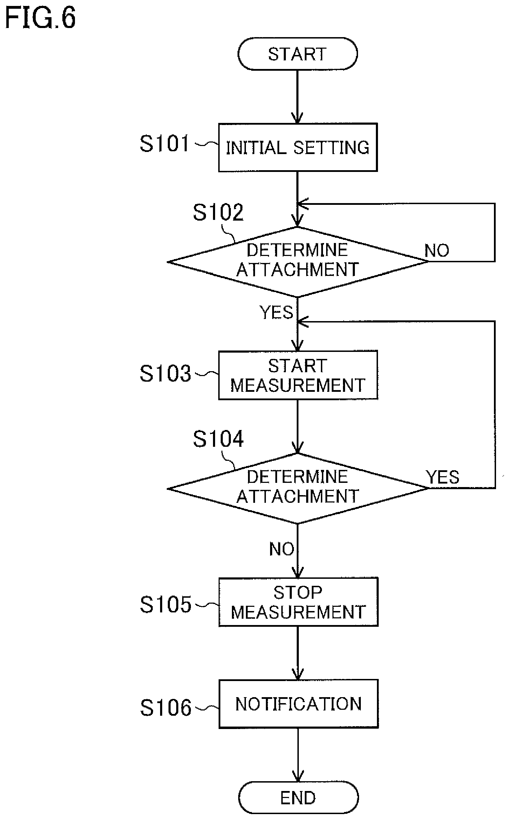

FIG. 6 is a flowchart showing operation of the wireless device 110 illustrated in FIG. 5. Referring to FIG. 6, a procedure of detecting attachment of the wireless device 110 to the gas meter 100 and a procedure of detecting detachment of the wireless device 110 from the gas meter 100 will be described.

First, when the wireless device 110 is attached to the gas meter 100, start-up and initial setting of the wireless device 110 are performed (S101). The start-up of the wireless device 110 herein refers to driving of the wireless device 110 from a standby mode in which current consumption is minimized. Since the wireless device 110 is often driven by an internal power supply such as a battery, the wireless device 110 is generally set in, for example, the standby mode in which current consumption is minimized. After the start-up and the initial setting at step S101, a detection process is performed to detect whether the wireless device 110 is attached to the gas meter 100 through the installation detection switch 203, the installation detection circuit 211, and the arithmetic section 213 (S 102). At step S102, if it is detected that the wireless device 110 is attached to the gas meter 100, the process proceeds to a next step. If it is not detected that the wireless device 110 is attached to the gas meter 100, the process remains at step S102. In this case, an attachment detection process is regularly performed. If it is detected that the wireless device 110 is attached to the gas meter 100 at step S102, a process of measuring a gas flow volume is started by using the flow volume detection switch 204, the flow volume detection circuit 212, and the arithmetic section 213 (S103). Then, it is detected whether the wireless device 110 is attached to the gas meter 100 (S104). Here, in a manner similar to step S102, the detection is performed by using the installation detection switch 203, the installation detection circuit 211, and the arithmetic section 213. If it is detected that the wireless device 110 is attached to the gas meter 100, the process proceeds to step S103 in order to continue the process of measuring the gas flow volume. On the other hand, if it is not detected that the wireless device 110 is attached to the gas meter 100 at step S104, the process of measuring the gas flow volume is stopped (S105). Thereafter, in the arithmetic section 213, a message indicating information including an event in which the wireless device 110 is not correctly installed in the gas meter 100 is generated in accordance with a predetermined message configuration, and the wireless communication section 215 outputs the message in accordance with a predetermined protocol (S106).

As described above, the flow of FIG. 6 enables regular detection of detachment of the wireless device 110 from the gas meter 100, and another wireless device can be notified of the detected result. In the flow of FIG. 6, measurement operation is stopped after detection of detachment and another wireless device is notified of the result of detection through the wireless communication section 215. Alternatively, depending on characteristics of the system, the notification may be performed with the measurement process being continued, or results of the process of measuring the gas flow volume after detection of detachment may be performed separately from results before detachment.

The foregoing configuration enables accurate detection of attachment of the wireless device 110 to the gas meter 100 while allowing flow volume detection, and also enables accurate detection of detachment of the wireless device 110 from the gas meter 100 or a failure in detection of the flow volume.

### Second Embodiment

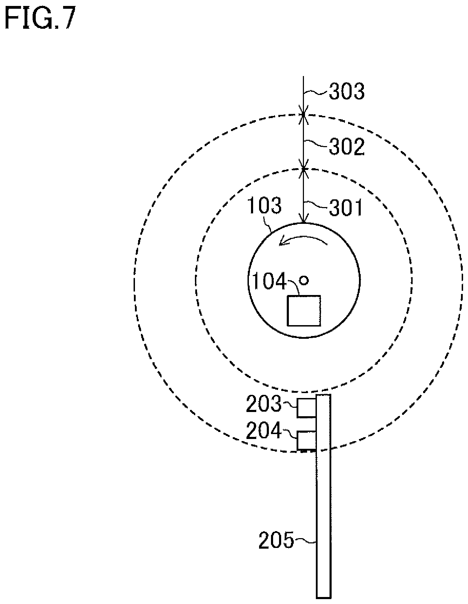

FIG. 7 schematically illustrates a positional relationship among a measurement magnet 104, an installation detection switch 203, and a flow volume detection switch 204 in a second embodiment of the present invention. Referring to FIG. 7, portions different from the first embodiment illustrated in FIG. 4 will be mainly described.

In FIG. 7, the installation detection switch 203 and the flow volume detection switch 204 are also mounted on a switch board 205. In a manner similar to the configuration illustrated in FIG. 4, the flow volume detection switch 204 is mounted such that the flow volume detection switch 204 is located in an area 302 relative to the measurement magnet 104. In this manner, when gas flows in the gas meter 100 to cause the measurement mechanism 103 to rotate, the measurement magnet 104 also rotates, and the flow volume detection switch 204 turns on or off based on the distance from the measurement magnet 104. The installation detection switch 203 is also located on the area 302. Thus, when gas flows in the gas meter 100 to cause the measurement mechanism 103 to rotate, the installation detection switch 203 also turns on or off based on the distance from the measurement magnet 104.

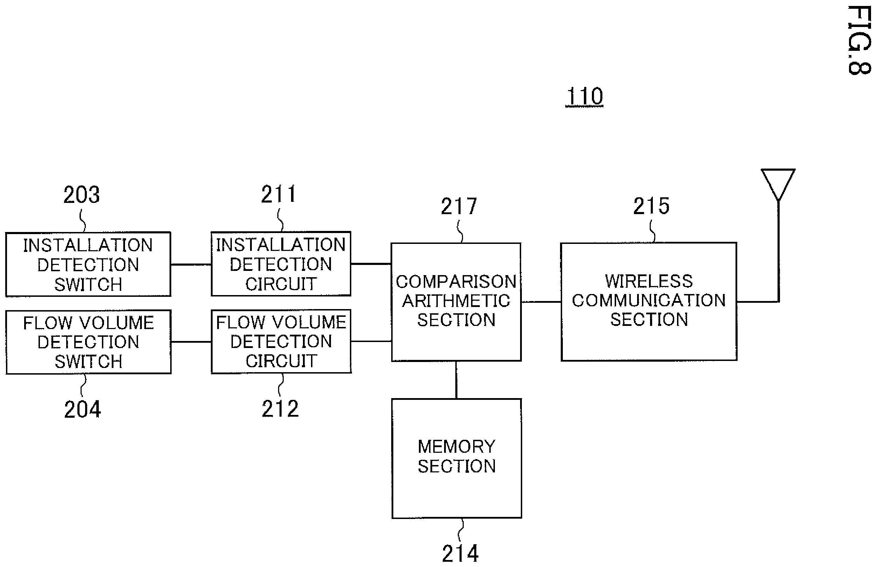

Referring now to FIG. 8, a mechanism for detecting whether a wireless device 110 is attached to the gas meter 100 will be described. FIG. 8 is an internal block diagram of the wireless device 110 of the second embodiment. Here, only portions different from the first embodiment will be described.

A comparison arithmetic section 217 in FIG. 8 compares waveforms acquired through the installation detection switch 203 and the flow volume detection switch 204, and determines whether the wireless device 110 is attached to the gas meter 100 or not. In the second embodiment, the installation detection switch 203 in the wireless device 110 is located closer to the measurement magnet 104 than the flow volume detection switch 204 is. Thus, the duty ratio of the installation detection switch 203 for turning on/off caused by rotation of the measurement magnet 104 is higher than the duty ratio of the flow volume detection switch 204 for turning on/off caused by rotation of the measurement magnet 104. Thus, while the installation detection switch 204 is on, the flow volume detection switch 203 is always on. As described above, the comparison arithmetic section 217 determines whether the installation detection switch 203 is on or not when the flow volume detection switch 204 is on, based on the comparison of input waveform levels. In this manner, it is determined whether the wireless device 110 is installed in the gas meter 100.

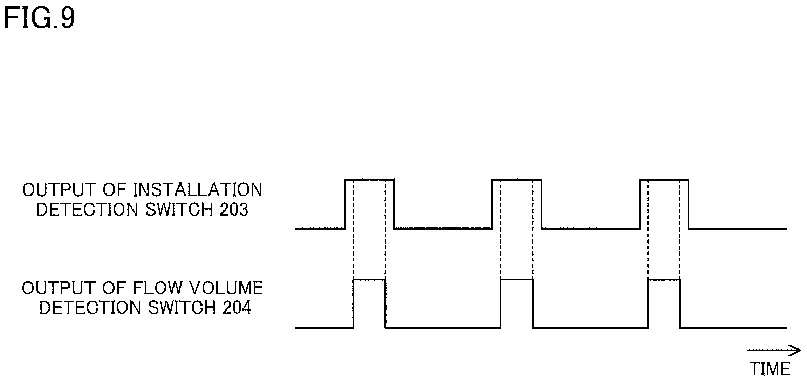

Referring now to FIG. 9, output waveforms of the installation detection switch 203 and the flow volume detection switch 204 in the wireless device 110 will be described. In FIG. 7, the installation detection switch 203 is located closer to the measurement magnet 104 in the gas meter 100 than the flow volume detection switch 204 is. Thus, as indicated by the upper waveform in FIG. 9, the output waveform of the installation detection switch 203 shows a duty ratio higher than that of the flow volume detection switch 204. In addition, while the signal level of the flow volume detection switch 204 is high, the signal level of the installation detection switch 203 is always high.

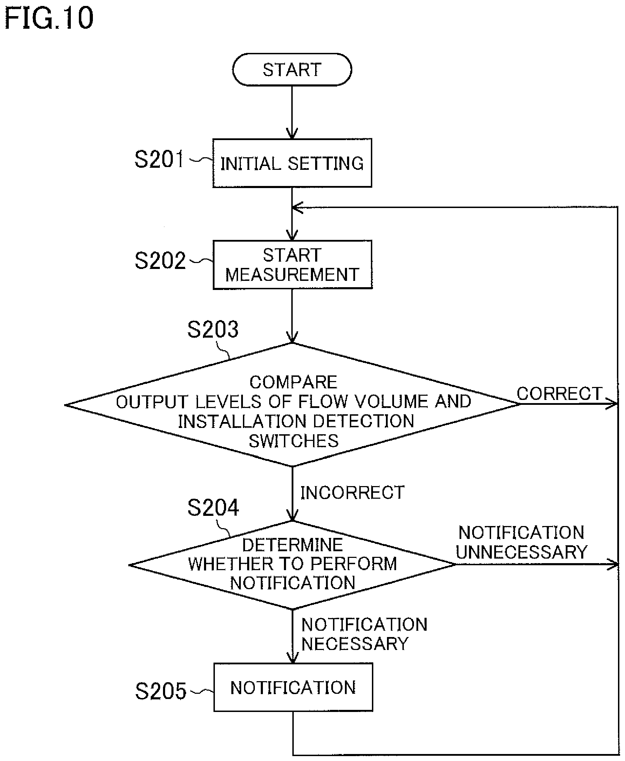

FIG. 10 is a flowchart showing operation of the wireless device 110 illustrated in FIG. 8. Referring now to FIG. 10, a procedure of detecting attachment of the wireless device 110 to the gas meter 100 and a procedure of detecting detachment of the wireless device 110 from the gas meter 100 will be described.

First, when the wireless device 110 is attached to the gas meter 100, and is started by switching and supplying power thereto. Then, parameters (e.g., a parameter about wireless communication and an initial value necessary for flow volume measurement) are written with a predetermined method (S201). At step S201, the wireless device 110 is started, and the parameters are set, thereby allowing the wireless device 110 to measure the gas flow volume. When gas flows in the gas meter 100 to rotate the measurement mechanism 103 and, at the same time, the distance between the measurement magnet 104 and the flow volume detection switch 204 varies, the flow volume detection switch 204 turns on or off. Thereafter, an output from the flow volume detection switch 204 is taken in the comparison arithmetic section 217 through the flow volume detection circuit 212, and a measurement process is performed with a predetermined program (S202). Subsequently, the comparison arithmetic section 217 receives a signal through the flow volume detection switch 204 and the flow volume detection circuit 212 and a signal through the installation detection switch 203 and the installation detection circuit 211. Then, the comparison arithmetic section 217 determines whether a signal from the installation detection switch 203 is high when a signal from the flow volume detection switch 204 is high, and determines whether a signal from the flow volume detection switch 204 is low when a signal from the installation detection switch 203 is low. Here, if an assumed relationship is detected, it is determined that the wireless device 110 is correctly attached to the gas meter 100, and the process proceeds to step S202 (S203). At step S203, if an assumed relationship is not detected between the signal from the installation detection switch 203 and the signal from the flow volume detection switch 204, it is determined whether a notification process in which information including an event of incorrect installation of the wireless device 110 is sent from the wireless communication section 215 (S204). In this determination, the comparison arithmetic section 217 refers to a history stored in the memory section 214, and determines whether the notification process continues or not. If the process proceeds to step S204 and no notification process has not been performed yet, a notification process is performed (S205). Specifically, the wireless device 110 generates a message in a predetermined message format in the comparison arithmetic section 217, and notifies another wireless device of incorrect attachment of the wireless device 110 to the gas meter 100 through the wireless communication section 215 via wireless communication. Then after the notification through the wireless communication section 215, the comparison arithmetic section 217 stores information that a notification process has been performed in the memory section 214. Thereafter, the process proceeds to step S202 (S205).

Through the foregoing flow, a notification process can be performed when the wireless device 110 is not correctly installed in the gas meter 100.

### Third Embodiment

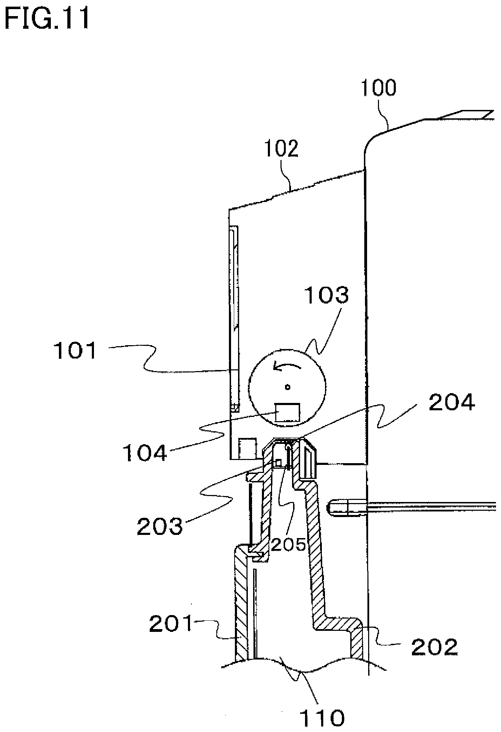

Referring now to FIG. 11, a wireless device according to a third embodiment will be described. FIG. 11 illustrates internal configurations of a gas meter and the wireless device. Portions different from the first embodiment illustrated in FIG. 3 will be described. In FIG. 11, an installation detection switch 203 and a flow volume detection switch 204 are mounted on a switch board 205. The flow volume detection switch 204 is located closer to a measurement magnet 104 than the installation detection switch 203 is. The flow volume detection switch 204 is, for example a reed switch with an axial lead. The installation detection switch 203 is a surface-mounted reed switch. These switches 204 and 203 are mounted on the switch board 205. In this manner, the switches 203 and 204 are mounted on the same switch board 205, and the distance from each of the switches 203 and 204 to the measurement magnet 104 is adjusted.

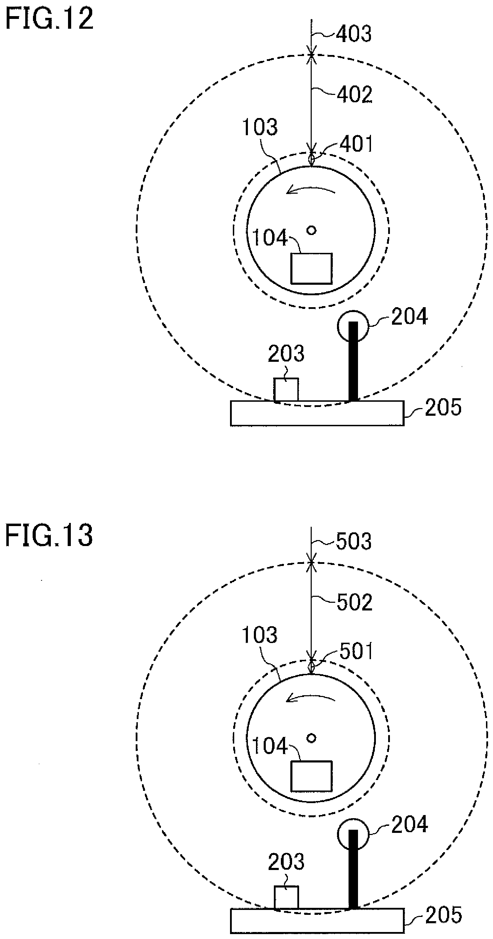

Referring now to FIG. 12, an operating range of the flow volume detection switch 204 will be described. In FIG. 12, regarding the flow volume detection switch 204, when gas flows in the gas meter 100 to rotate the measurement magnet 104 in a measurement mechanism 103, the positional relationship between the measurement magnet 104 and the flow volume detection switch 204 changes. An area 401 is an area where the flow volume detection switch 204 is always turned on by the measurement magnet 104. An area 402 is an area where the flow volume detection switch 204 is turned on or off by the measurement magnet 104. The area 403 is an area where the flow volume detection switch 204 is not turned on by the measurement magnet 104.

Referring now to FIG. 13, operation of the installation detection switch 203 in accordance with the distance between the measurement magnet 104 and the installation detection switch 203 will be described. An area 501 is an area where the installation detection switch 203 is always turned on by the measurement magnet 104. An area 502 is an area where the installation detection switch 203 is turned on or off by the measurement magnet 104. An area 503 is an area where the installation detection switch 203 is not turned on by the measurement magnet 104.

As illustrated in FIG. 11, the distance between the measurement magnet 104 and the installation detection switch 203 is different from the distance between the measurement magnet 104 and the flow volume detection switch 204, and as illustrated in FIGS. 12 and 13, the installation detection switch 203 and the flow volume detection switch 204 are located in the same operating area but on/off operations of these switches differ from each other. Under the above-described conditions, it will be described how it is detected whether the wireless device 110 is installed in the gas meter 100.

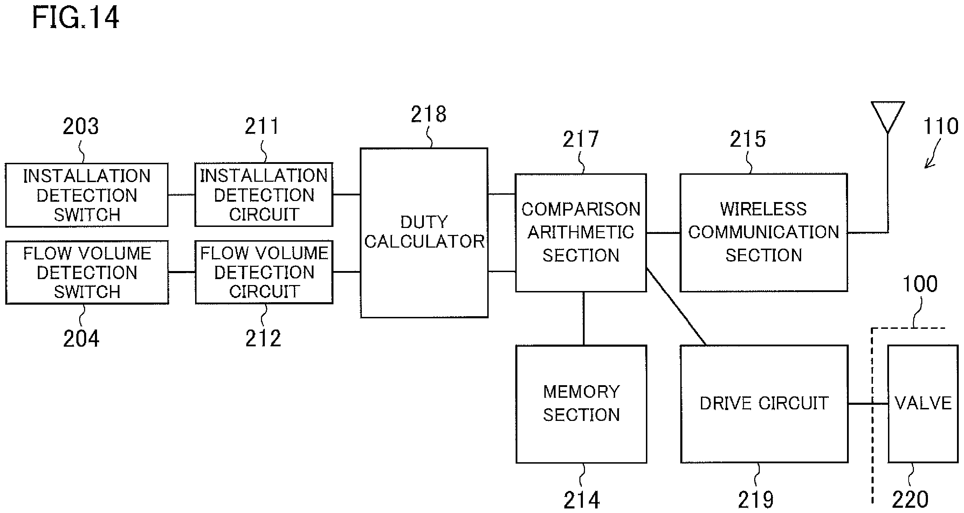

FIG. 14 is an internal block diagram of the wireless device 110 of the third embodiment. Here, only portions different from the first embodiment illustrated in FIG. 5 and the second embodiment illustrated in FIG. 8 will be described. In FIG. 14, a duty calculator 218 receives a signal detected by the installation detection switch 203 through the installation detection circuit 211 and a signal detected by the flow volume detection switch 204 through the flow volume detection circuit 212. Based on the signals from the installation detection switch 203 and the flow volume detection switch 204, the duty calculator 218 calculates duty ratios (i.e., a flow volume signal duty ratio and an installation signal duty ratio) of the signals. Specifically, a period in which a signal level is high is detected within a predetermined reference time. Then, the period in which the signal level is high is divided by the predetermined reference time, thereby calculating a flow volume signal duty ratio and an installation signal duty ratio.

The comparison arithmetic section 217 determines whether the wireless device 110 is correctly installed in the gas meter 100 based on the flow volume signal duty ratio and the installation signal duty ratio calculated by the duty calculator 218. If the flow volume signal duty ratio is higher than or equal to the installation signal duty ratio, it is determined that the wireless device 110 is correctly installed in the gas meter. If the flow volume signal duty ratio is lower than the installation signal duty ratio, it is determined that the wireless device 110 is not correctly installed in the gas meter.

In addition, if it is determined that the wireless device 110 is not correctly installed in the gas meter 100, the comparison arithmetic section 217 provides an output to the drive circuit 219 so as to close a valve 220 of the gas meter 100. The configuration of the drive circuit 219 is optimized depending on the type of the valve 220. For example, if the valve 220 is a valve constituted by a stepping motor or a simple brush motor, the drive circuit 219 is a PWM circuit or a bridge circuit, for example. The valve 220 is a valve incorporated in the gas meter 100 or a valve externally provided on the gas meter 100, and is, for example, a valve constituted by a stepping motor or a valve to be electromagnetically driven. When the valve is closed, a gas supply is stopped.

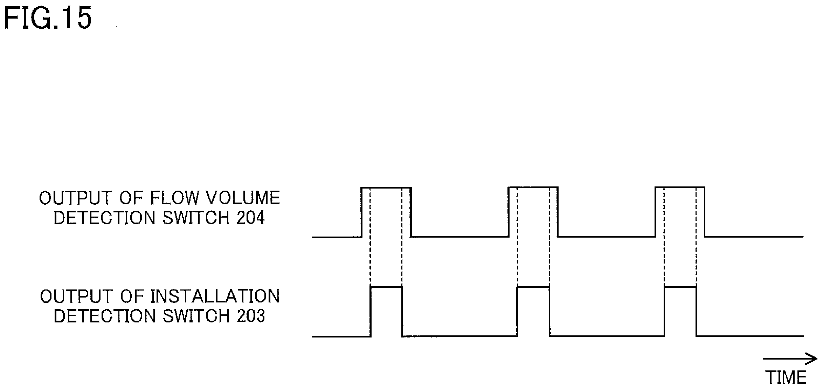

Referring now to FIG. 15, a relationship between an output of the installation detection switch 203 and an output of the flow volume detection switch 204 will be described. FIG. 15 shows waveforms in a case where the wireless device 110 is correctly installed in the gas meter 100 so that gas flows into the gas meter 100, the measurement mechanism 103 rotates, and the installation detection switch 203 and the flow volume detection switch 204 turn on or off. The upper waveform is a waveform acquired from an output detected by the flow volume detection switch 204 through the flow volume detection circuit 212. The lower waveform is a waveform acquired from an output detected by the installation detection switch 203 through the installation detection circuit 211.

In FIG. 15, a comparison between the output waveform from the flow volume detection switch 204 and the output waveform from the installation detection switch 203 shows that a high-level period of the output waveform from the flow volume detection switch 204 is longer than that of the waveform from the installation detection switch 203. This is because the flow volume detection switch 204 is closer to the measurement magnet 104 in the gas meter 100 than the installation detection switch 203 is, and thus, the flow volume detection switch 204 is on in a longer period than the installation detection switch 203 when the measurement magnet 104 rotates. Thus, using a result of calculation of an on period of a signal occupying a unit time as a duty ratio, the state in which the flow volume signal duty ratio is higher than or equal to the installation signal duty ratio can be determined to be a state in which the gas meter 100 is correctly installed in the wireless device 110. On the other hand, a state in which the flow volume signal duty ratio is lower than the installation signal duty ratio is determined to be a state in which the wireless device 110 is not correctly installed in the gas meter 100.

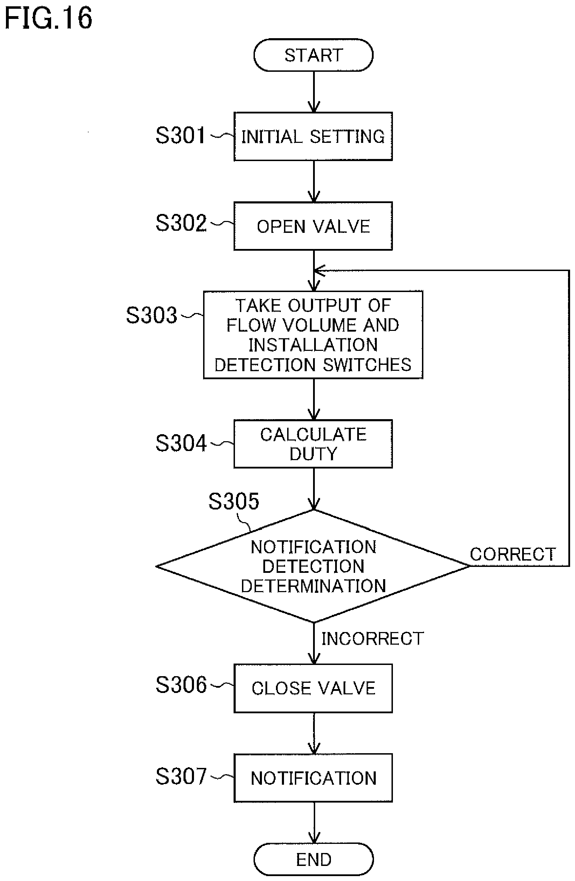

FIG. 16 is a flowchart showing operation of the wireless device 110 illustrated in FIG. 14. Referring to FIG. 16, a procedure of detecting that the wireless device 110 is attached to the gas meter 100 and a process performed in response to detachment of the wireless device 110 from the gas meter 100 will be described.

First, the wireless device 110 is attached to the gas meter 100, and initial setting for starting gas flow volume measurement and installation detection is performed. Specifically, the wireless device 110 is started, and an initial value for the wireless device 110 to measure a gas flow volume and information specific to the wireless device 110 (e.g., a channel to be used and a transmission output) are set (S301). Next, to enable gas to be used, a process of opening the valve 220 is performed on the wireless device 110 (S302). Step S302 allows the gas meter 100 to be a state in which gas can be used. Once gas is used, the measurement mechanism 103 rotates, and a signal indicating on/off of the installation detection switch 203 is taken in the duty calculator 218 through the installation detection circuit 211 and a signal indicating on/off of the flow volume detection switch 204 is taken in the duty calculator 218 through the flow volume detection circuit 212 (S303). Thereafter, the duty calculator 218 obtains a period in which the installation detection switch 203 is on and a period in which the flow volume detection switch 204 is on in a predetermined time, and calculates duty ratios (S304). Then, the comparison arithmetic section 217 compares the duty ratio (an installation signal duty ratio) from the installation detection switch 203 and the duty ratio (the flow volume signal duty ratio) from the flow volume detection switch 204 calculated at step S304. If the flow volume signal duty ratio is higher than or equal to the installation signal duty ratio, it is determined that the wireless device 110 is correctly attached to the gas meter 100. Otherwise, it is determined that the wireless device 110 is not correctly attached to the gas meter 100 (S305). At step S305, if it is determined that the wireless device 110 is correctly attached to the gas meter 100, the process proceeds to step S303. At step S305, if it is determined that the wireless device 110 is not correctly attached to the gas meter 100, the comparison arithmetic section 217 generates a signal for closing the valve 220, and outputs the signal to the drive circuit 219 to close the valve 220 (S306). Subsequently, when the valve 220 is closed, the comparison arithmetic section 217 generates a message indicating that the wireless device 110 is not correctly installed in the gas meter 100 and that the valve 220 is closed, in accordance with a predetermined protocol, and performs radio transmission to another terminal through the wireless communication section 215, thereby performing a notification process (S307).

Through the foregoing flow, a notification process can be performed when the wireless device 110 is not correctly installed in the gas meter 100.

### Fourth Embodiment

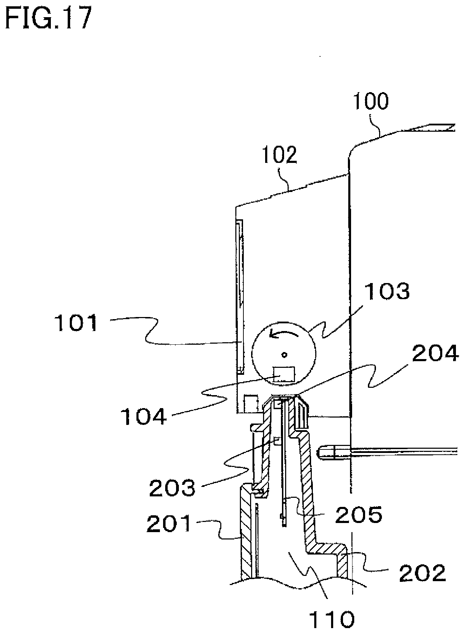

FIG. 17 illustrates an internal configuration of a wireless device 110 according to a fourth embodiment. Here, portions different from the first embodiment illustrated in FIG. 3 will be mainly described.

In the wireless device 110 illustrated in FIG. 17, a flow volume detection switch 204 is mounted on a switch board 205 such that the flow volume detection switch 204 is closest to a measurement magnet 104 when the wireless device 110 is attached to a gas meter 100. An installation detection switch 203 is located farther from the measurement magnet 104 than the flow volume detection switch 204 is. Each of the flow volume detection switch 204 and the installation detection switch 203 is a reed switch constituted by lead such as ferromagnet or a semiconductor element reactive to magnetism such that each of the switches is reactive to the measurement magnet 104. The flow volume detection switch 204 and the installation detection switch 203 have different working values, and react at different distances to the same magnet. Here, the installation detection switch 203 is equipped with a component that has a smaller working value (i.e., is more sensitive) than the flow volume detection switch 204, and is reactive even at a large distance from the measurement magnet 104.

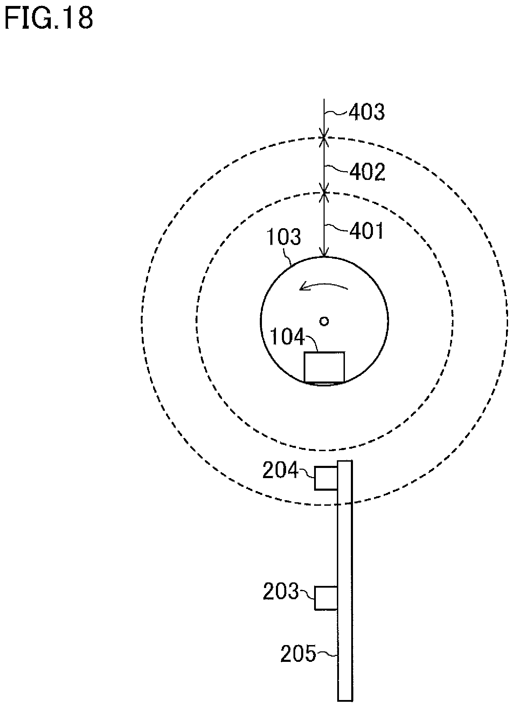

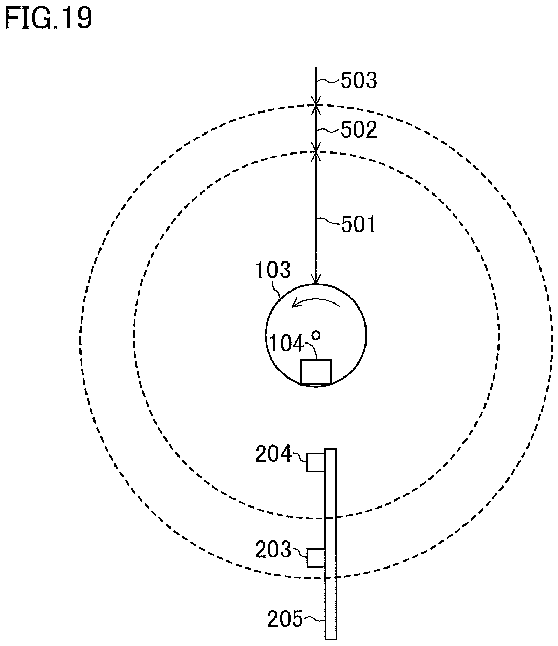

Referring now to FIGS. 18 and 19, operating ranges of the flow volume detection switch 204 and the installation detection switch 203 will be described. FIG. 18 is an illustration showing an area in which the flow volume detection switch 204 operates when the measurement magnet 104 rotates. FIG. 19 is an illustration showing an area in which the installation detection switch 203 operates when the measurement magnet 104 rotates.

As illustrated in FIG. 18, when gas flows to rotate the measurement mechanism 103 and the measurement magnet 104 also rotates at the same time, the distance between the measurement magnet 104 and the flow volume detection switch 204 varies, and is divided into three areas depending on the operating state of the flow volume detection switch 204. An area 401 is an area where the flow volume detection switch 204 is always on even when the measurement magnet 104 rotates to cause a variation of the distance between the measurement magnet 104 and the flow volume detection switch 204. An area 402 is an area where the flow volume detection switch 204 turns on or off when the measurement magnet 104 rotates to cause a variation of the distance between the measurement magnet 104 and the flow volume detection switch 204. An area 403 is an area where the flow volume detection switch 204 is always off even when the measurement magnet 104 rotates to cause a variation of the distance between the measurement magnet 104 and the flow volume detection switch 204.

On the other hand, FIG. 19 is a view in which the region is divided into three areas depending on the distance between the measurement magnet 104 and the installation detection switch 203 to classify operation of the installation detection switch 203. An area 501 is an area where the installation detection switch 203 is always on even when the measurement magnet 104 rotates to cause a variation of the distance between the measurement magnet 104 and the installation detection switch 203. An area 502 is an area where the installation detection switch 203 turns on or off when the measurement magnet 104 rotates to cause a variation of the distance between the measurement magnet 104 and the installation detection switch 203. An area 503 is an area where the installation detection switch 203 is always off even when the measurement magnet 104 rotates to cause a variation of the distance between the measurement magnet 104 and the installation detection switch 203.

The operating range of the installation detection switch 203 illustrated in FIG. 19 is larger than the operating range of the flow volume detection switch 204 illustrated in FIG. 18. This is because the working value of the installation detection switch 203 is higher than that of the flow volume detection switch 204, and thus, an area where the switch is reactive is enlarged even at a location where a magnetic field of the measurement magnet 104 is small.

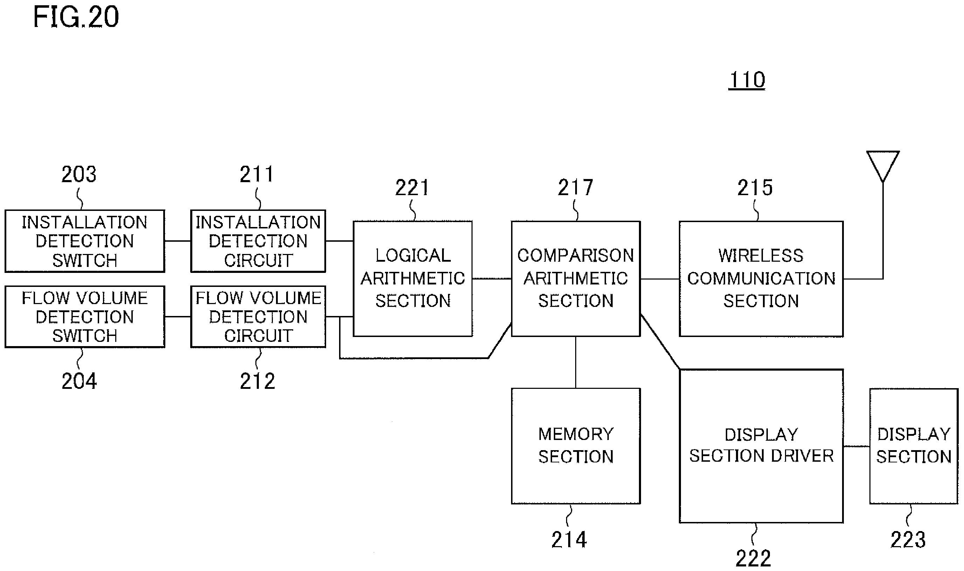

Referring now to FIG. 20, an internal configuration of the wireless device 110 of the fourth embodiment and blocks thereof will be described. Only portions different from the first embodiment illustrated in FIG. 5, the second embodiment illustrated in FIG. 8, and the third embodiment illustrated in FIG. 14 will be described.

In FIG. 20, a logical arithmetic section 221 receives a signal from the installation detection switch 203 through the installation detection circuit 211 and a signal from the flow volume detection switch 204 through the flow volume detection circuit 212. When the input signal from the installation detection switch 203 is high and the input signal from the flow volume detection switch 204 is high, the logical arithmetic section 221 outputs a high level to the comparison arithmetic section 217. If the wireless device 110 is not correctly attached, signals input to the logical arithmetic section 221 from the flow volume detection switch 204 repeatedly change to high and low levels depending on the gas flow volume, whereas input signals from the installation detection switch 203 are fixed at a low level. Thus, the comparison arithmetic section 217 cannot perform installation detection, and it is determined that the wireless device 110 is not correctly attached. To cause a display section 223 to show correct or incorrect installation of the wireless device 110, the comparison arithmetic section 217 outputs a signal to be input to a display section driver 222 in order to drive the display section 223. Specifically, if the wireless device 110 is correctly attached, when the wireless device 110 is started, a signal indicating correct installation is output. If the wireless device 110 is not correctly attached, notification of this incorrect attachment state is issued when the wireless device 110 is started. If the incorrect attachment state is not improved, the notification of the incorrect attachment state continues to be issued.

The display section driver 222 is a circuit for controlling the display section 223. In a case where the display section 223 is a liquid crystal display (LCD), the display section driver 222 is a liquid crystal drive circuit or a circuit for driving a liquid crystal backlight. The display section driver 222 generates a signal for controlling the display section 223 depending on a signal from the comparison arithmetic section 217.

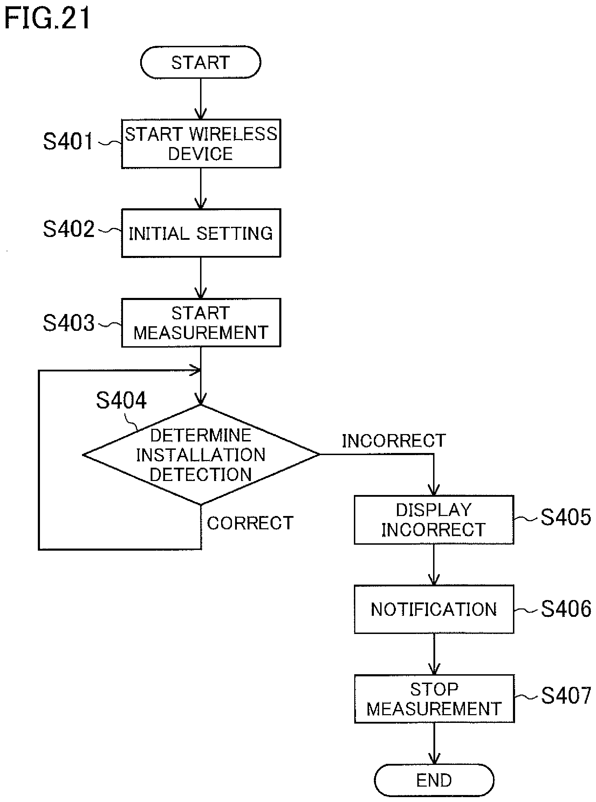

FIG. 21 is a flowchart showing operation of the wireless device 110 illustrated in FIG. 20. First, in attaching the wireless device 110 to the gas meter 100, as part of a setting job, the wireless device 110 is started with a predetermined procedure. The term "start" herein refers to a job for setting the wireless device 110 operable by supplying power to, for example, a circuit or connecting a battery or the like to the wireless device 110 (S401). Next, the wireless device 110 is connected via wires or wirelessly by using, for example, another terminal, and initial setting is performed. The initial setting includes settings of information on the location of the wireless device 110, serial numbers, information necessary for a wireless network architecture, initial values of gas flow volume detection, etc. Then, the wireless device 110 is attached to the gas meter 100, and connection for measuring the gas flow volume and other processes are performed (S402). Once the initial setting was performed at the previous step, the wireless device 110 is allowed to start a measurement process of measuring the gas flow volume, and starts the measurement process in accordance with the gas flow volume in the gas meter (S403). Thereafter, it is detected whether the wireless device 110 is correctly installed in the gas meter 100. Specifically, signals detected by the installation detection switch 203 and the flow volume detection switch 204 are taken in the logical arithmetic section 221 through the installation detection circuit 211 and the flow volume detection circuit 212, respectively. The signals taken in the logical arithmetic section 221 are set at a high level and output from the logical arithmetic section 221 to the comparison arithmetic section 217 when the signal from the flow volume detection switch 204 and the signal from the installation detection switch 203 are both high. If the signal from the flow volume detection switch 204 and the signal from the installation detection switch 203 are both low, a low-level signal is always output from the logical arithmetic section 221. Subsequently, in the comparison arithmetic section 217, the signal from the flow volume detection switch 204 is taken through the flow volume detection circuit 212, and a measurement process of measuring a gas flow volume is performed. At the same time, the signal from the logical arithmetic section 221 is also input, and installation detection is performed by using the signal from the logical arithmetic section 221. In the measurement process of measuring a gas flow volume, it is detected whether there is a change in the signal from the logical arithmetic section 221. If the high level from the logical arithmetic section 221 is detected, it is determined that the wireless device 110 is correctly attached. If it is determined that the wireless device 110 is correctly attached, the process regularly proceeds to this step, and operation of determining that the wireless device 110 is correctly attached is performed (S404). At step S404, if it is determined that the wireless device 110 is not correctly attached to the gas meter 100, the comparison arithmetic section 217 generates a signal to be displayed on the display section 223 and outputs the signal to the display section driver 222 in order to notify that the wireless device 110 is not correctly attached to the gas meter 100. Based on the signal received from the comparison arithmetic section 217, the display section driver 222 performs signal processing, supplies a signal for displaying incorrect attachment to the display section 223, and drives the display section 223 (S405). Then, to notify another wireless device except the wireless device 110 wirelessly that correct attachment of the wireless device 110 to the gas meter 100 is not determined any more, the comparison arithmetic section 217 generates a message in accordance with a predetermined protocol or a communication message format. The generated message is input to the wireless communication section 215, and the wireless communication section 215 transmits the message to an external wireless device via an antenna (S406). Thereafter, since the wireless device 110 is not correctly attached, the comparison arithmetic section 217 stops the measurement process of measuring a gas flow volume (S407).

As described above, through the flow shown in FIG. 21, it is detected that the wireless device 110 is not correctly installed in the gas meter 100, and an external device can be notified of the incorrect attachment through the display section 223 such as an LCD or wirelessly.

### INDUSTRIAL APPLICABILITY

As described above, it is possible to detect whether a wireless device according to the present invention is correctly attached to a gas meter by using a measurement magnet in the gas meter. Here, a mechanism for detecting attachment of the wireless device is configured in a manner similar to a mechanism for detecting a gas flow volume, and thus, whether flow volume detection is possible or not can be determined accurately.

### DESCRIPTION OF REFERENCE CHARACTERS

- 100: gas meter
- 101: usage amount display unit
- 102: measurement unit
- 103: measurement mechanism
- 104: measurement magnet
- 110: wireless device
- 201: upper case
- 202: lower case
- 203: installation detection switch
- 204: flow volume detection switch
- 205: switch board
- 206: main board
- 207: connection harness
- 208: antenna element
- 209: ground board
- 210: battery
- 211: installation detection circuit
- 212: flow volume detection circuit
- 213: arithmetic section
- 214: memory section
- 215: wireless communication section
- 217: comparison arithmetic section
- 218: duty calculator
- 219: drive circuit
- 220: valve
- 221: logical arithmetic section
- 222: display section driver
- 223: display section

## Claims

1. A wireless device comprising:
a casing (201, 202) defining a contour of the wireless device;
a flow volume detection switch (204) located in the casing (201, 202) so as to magnetically detect a flow volume with a measurement magnet (104) located in a flowmeter (100);
an installation detection switch (203) located in the casing (201, 202) so as to detect an installation location of the casing (201, 202) to the flowmeter (100) through detection of a magnetic field generated by the measurement magnet (104);
an arithmetic section (217) to calculate an output from the flow volume detection switch (204) and an output from the installation detection switch (203); and
a wireless communication section (215) configured to transmit a result of calculation by the arithmetic section (217) to another terminal, **characterized in that**
a high/low relationship, for a correct attachment of the casing (201, 202) to the flowmeter (100), between a duty ratio of an output from the flow volume detection switch (204) and a duty ratio of an output from the installation detection switch (203) depends on a relationship between a distance between the measurement magnet (104) and the flow volume detection switch (204) and a distance between the measurement magnet (104) and the installation detection switch (203), and
the arithmetic section (217) determines that the casing (201, 202) is not correctly installed to the flowmeter (100) if the high/low relationship between the duty ratios is not satisfied.

2. The wireless device of claim 1, wherein
the arithmetic section (217) changes the result of calculation of the output from the flow volume detection switch (204) depending on the output from the installation detection switch (203).

3. The wireless device of claim 2, wherein
if it is not determined that the casing (201, 202) is correctly installed to the flowmeter (100), the arithmetic section (217) stops transmission of the output from the flow volume detection switch (204).

4. The wireless device of claim 2, wherein
if it is not determined that the casing (201, 202) is correctly installed to the flowmeter (100), the arithmetic section (217) transmits information including an event of incorrect installation from the wireless communication section (215).

5. The wireless device of claim 2, wherein
if it is not determined that the casing (201, 202) is correctly installed to the flowmeter (100), the arithmetic section (217) separates a result of calculation under determination of correct installation from a result of calculation under determination of incorrect installation.

## Patentansprüche

1. Drahtlose Vorrichtung, umfassend:
ein Gehäuse (201, 202), das einen Umriss der drahtlosen Vorrichtung definiert;
einen Strömungsvolumen-Erfassungsschalter (204), der sich in dem Gehäuse (201, 202) befindet, um ein Strömungsvolumen mit einem Messungsmagneten (104), der sich in einem Strömungsmesser (104) befindet, magnetisch zu erfassen;
einen Installationserfassungsschalter (203), der sich in dem Gehäuse (201, 202) befindet, um einen Installationsort des Gehäuses (201, 202) an dem Strömungsmesser (100) durch eine Erfassung eines Magnetfelds zu erfassen, das durch den Messungsmagneten (104) erzeugt wird;
einen Arithmetikabschnitt (217) zum Berechnen eines Ausgangs aus dem Strömungsvolumen-Erfassungsschalter (204) und eines Ausgangs aus dem Installationserfassungsschalter (203); und
einen drahtlosen Kommunikationsabschnitt (215), der konfiguriert ist, um ein Berechnungsergebnis durch den Arithmetikabschnitt (217) an ein anderes Terminal zu übertragen, **dadurch gekennzeichnet, dass**
eine Hoch/Niedrig-Beziehung zur korrekten Befestigung des Gehäuses (201, 202) an dem Strömungsmesser (100) zwischen einem Tastverhältnis eines Ausgangs aus dem Strömungsvolumen-Erfassungsschalter (204) und einem Tastverhältnis eines Ausgangs aus dem Installationserfassungsschalter (203) von einer Beziehung zwischen einem Abstand zwischen dem Messungsmagneten (104) und dem Strömungsvolumen-Erfassungsschalter (204) und einem Abstand zwischen dem Messungsmagneten (104) und dem Installationserfassungsschalter (203) abhängt, und
der Arithmetikabschnitt (217) bestimmt, dass das Gehäuse (201, 202) nicht korrekt an dem Strömungsmesser (100) installiert ist, wenn die Hoch/Niedrig-Beziehung zwischen den Tastverhältnissen nicht erfüllt ist.

2. Drahtlose Vorrichtung nach Anspruch 1, wobei
der Arithmetikabschnitt (217) das Berechnungsergebnis des Ausgangs aus dem Strömungsvolumen-Erfassungsschalter (204) in Abhängigkeit vom Ausgang aus dem Installationserfassungsschalter (203) ändert.

3. Drahtlose Vorrichtung nach Anspruch 2, wobei
wenn nicht bestimmt ist, dass das Gehäuse (201, 202) an dem Strömungsmesser (100) korrekt installiert ist, der Artihmetikabschnitt (217) eine Übertragung des Ausgangs aus dem Strömungsvolumen-Erfassungsschalter (204) stoppt.

4. Drahtlose Vorrichtung nach Anspruch 2, wobei
wenn nicht bestimmt ist, dass das Gehäuse (201, 202) an dem Strömungsmesser (100) korrekt installiert ist, der Arithmetikabschnitt (217) Informationen überträgt, die eine nicht korrekte Installation aus dem drahtlosen Kommunikationsabschnitt (215) beinhalten.

5. Drahtlose Vorrichtung nach Anspruch 2, wobei
wenn nicht bestimmt ist, dass das Gehäuse (201, 202) an dem Strömungsmesser (100) korrekt installiert ist, der Arithmetikabschnitt (217) ein Berechnungsergebnis unter Bestimmung einer korrekten Installation von einem Berechnungsergebnis unter Bestimmung einer nicht korrekten Installation trennt.

## Revendications

1. Dispositif sans fil comprenant :
un boîtier (201, 202) définissant un contour du dispositif sans fil ;
un commutateur de détection de volume d'écoulement (204) situé dans le boîtier (201, 202) de manière à détecter magnétiquement un volume d'écoulement avec un aimant de mesure (104) situé dans un débitmètre (100) ;
un commutateur de détection d'installation (203) situé dans le boîtier (201, 202) de manière à détecter un emplacement d'installation du boîtier (201, 202) sur le débitmètre (100) par le biais de la détection d'un champ magnétique généré par l'aimant de mesure (104) ;
une section arithmétique (217) pour calculer une émission depuis le commutateur de détection de volume d'écoulement (204) et une émission depuis le commutateur de détection d'installation (203) ; et
une section de communication sans fil (215) conçue pour transmettre un résultat de calcul par la section arithmétique (217) à un autre terminal, **caractérisé en ce que**
une relation élevé/faible, en vue d'une attache correcte du boîtier (201, 202) au débitmètre (100), entre un rapport cyclique d'une émission depuis le commutateur de détection de volume d'écoulement (204) et un rapport cyclique d'une émission depuis le commutateur de détection d'installation (203) dépend d'un rapport entre une distance entre l'aimant de mesure (104) et le commutateur de détection de volume d'écoulement (204) et une distance entre l'aimant de mesure (104) et le commutateur de détection d'installation (203), et
la section arithmétique (217) détermine que le boîtier (201, 202) n'est pas correctement installé sur le débitmètre (100) si la relation élevé/faible entre les rapports cycliques n'est pas satisfaite.

2. Dispositif sans fil selon la revendication 1, dans lequel
la section arithmétique (217) modifie le résultat de calcul de l'émission depuis le commutateur de détection de volume d'écoulement (204) en fonction de l'émission depuis le commutateur de détection d'installation (203).

3. Dispositif sans fil selon la revendication 2, dans lequel
si l'on ne détermine pas que le boîtier (201, 202) est correctement installé sur le débitmètre (100), la section arithmétique (217) arrête la transmission de l'émission depuis le commutateur de détection de volume d'écoulement (204).

4. Dispositif sans fil selon la revendication 2, dans lequel
si l'on ne détermine pas que le boîtier (201, 202) est correctement installé sur le débitmètre (100), la section arithmétique (217) transmet des informations comprenant un événement d'installation incorrecte depuis la section de communication sans fil (215).

5. Dispositif sans fil selon la revendication 2, dans lequel
si l'on ne détermine pas que le boîtier (201, 202) est correctement installé sur le débitmètre (100), la section arithmétique (217) sépare un résultat de calcul dans le cas de la détermination d'une installation correcte d'un résultat de calcul dans le cas de la détermination d'une installation incorrecte.
